# EUROPÄISCHE PATENTSCHRIFT

(11) **EP 3 140 136 B1**
(45) Veröffentlichungstag und Bekanntmachung des Hinweises auf die Patenterteilung: **10.03.2021**
(21) Anmeldenummer: 15720691.3
(22) Anmeldetag: 30.04.2015
(51) Int. Cl.: B60G 3/28, B60G 7/00, B60G 7/02, F16F 1/368

(54) **EINZELRADAUFHÄNGUNG FÜR EIN FAHRZEUG**
INDEPENDENT SUSPENSION FOR A VEHICLE
SUSPENSION INDÉPENDANTE POUR UN VÉHICULE

(30) Priorität: 06.05.2014 DE 102014208403
(43) Veröffentlichungstag der Anmeldung: 15.03.2017
(73) Patentinhaber: Bayerische Motoren Werke Aktiengesellschaft, 80809 München (DE)
(72) Erfinder: SCHOLZ, Hubert, 81543 München (DE); SEETHALER, Ludwig, 85241 Hebertshausen (DE)
(86) Internationale Anmeldenummer: PCT/EP2015/059492
(87) Internationale Veröffentlichungsnummer: WO 2015/169683

(56) Entgegenhaltungen:
- EP-A2- 0 213 367
- DE-A1-102008 043 330
- DE-A1-102009 002 939
- DE-A1-102011 077 336
- FR-A1- 2 484 926
- JP-A- H01 212 603

## Beschreibung

Vorliegende Erfindung betrifft eine Einzelradaufhängung für ein Fahrzeug, insbesondere ein Kraftfahrzeug, nach dem Oberbegriff des Anspruchs 1.

Typische Einzelradaufhängungen für Fahrzeuge weisen mehrere Lenker auf, die einen Radträger mit der Karosserie des Fahrzeugs bis zu einem gewissen Ausmaß gelenkig verbinden, derart, dass das am Radträger drehbar gelagerte Rad auch bei seinen (u.a. für den Komfort der Fahrzeug-Insassen erforderlichen) Hubbewegungen möglichst günstige Positionen hinsichtlich Spur und Sturz (Spurwinkel und Sturzwinkel sind dem Fachmann geläufig) einnimmt. Zur Abfederung des Radträgers gegenüber der Karosserie (im Hinblick auf dessen vertikale Hubbewegungen) werden dabei üblicherweise separate Federelemente, insbesondere in Form von Schraubenfedern, eingesetzt. Beispielsweise aus der DE 10 2008 043 330 A1 oder aus der DE 10 2011 077 336 A1 ist es aber auch bekannt, dass diese radführenden Lenker als biegeelastische Streben insbesondere in faserverstärktem Kunststoff ausgeführt ausgebildet sein können, welche die Federungsfunktion mit übernehmen. Bei solchen Lenkern handelt es sich demzufolge um elastische Federlenker. Zum Stand der Technik im Gebiet der Einzelradaufhängung für ein Fahrzeug wird ferner auf die JP H01 212603 A, die FR 2 484 926 A1 und die EP 0 213 367 A2 hingewiesen.

Hier soll nun für eine Einzelradaufhängung ein Fahrzeugs mit solchen Federlenkern nach dem Oberbegriff des Anspruchs ein Maßnahme aufgezeigt werden, mit Hilfe derer die o.g. gewünschten Rad-Positionen, insbesondere der jeweilige Sturzwinkel des Rades bei Hubbewegung des Radträgers günstig dargestellt werden kann (= Aufgabe der vorliegenden Erfindung).

Die Lösung der Aufgabe ergibt sich mit den Merkmalen des Anspruchs 1; die Unteransprüche haben vorteilhafte Ausgestaltungen der Erfindung zum Gegenstand.

Somit wird die Aufgabe gelöst durch eine Einzelradaufhängung für ein Fahrzeug, insbesondere für ein Kraftfahrzeug, die einen Radträger umfasst, an welchem das zugeordnete Fahrzeug-Rad wir üblich um seine Drehachse drehbar befestigt ist. Des Weiteren sind zumindest ein oberer Federlenker und zumindest ein unterer Federlenker vorgesehen. Die beiden Federlenker verbinden jeweils den Radträger mit der Karosserie und vereinen dabei die Funktionen herkömmlicher radführender sowie einer Tragfeder, über welche die Karosserie des Fahrzeugs (= der Fzg.-Aufbau) anteilig auf dem jeweiligen Rad abgestützt ist. Hierzu sind die zumindest zwei Federlenker zwei voneinander getrennte und aus faserverstärktem Kunststoff bestehende Bauteile. Die Federlenker sind als annähernd plattenförmige Bauteile ausgebildet. Im Folgenden wird stets von einem (in Vertikalrichtung betrachtet) oberen Federlenker und einem (in Vertikalrichtung betrachtet) unteren Federlenker gesprochen. Allerdings können auch mehrere obere Federlenker und/oder mehrere untere Federlenker vorgesehen sein. Jeder der Federlenker ist mit einem Ende mit der Karosserie und mit seinem anderen Ende mit dem Radträger verbunden, und zwar jeweils solchermaßen, dass die Federlenker ihre Funktion als Biegefeder ausüben können, d.h. die besagte Verbindung darf jedenfalls bezüglich der Längsachse des Fahrzeug nicht gelenkig sein. Die Verbindung der Federlenker mit dem Radträger hingegen kann entweder starr oder derart gelenkig bzw. bezüglich einer Vertikalachse verdrehbar ausgeführt sein, dass es sich dabei entweder um eine Einzelradaufhängung für ein festes nichtlenkbares Rad oder um eine solche für ein lenkbares Rad handelt. Auch ist der Begriff "Karosserie" breit zu verstehen und umfasst insbesondere auch einen etwaigen Achsträger, der fest bzw. über insbesondere zur Geräuschdämmung vorgesehene gummielastische Lager mit der eigentlichen Karosserie des Fahrzeugs, d.h. mit dessen Aufbau verbunden ist.

Zur Lösung der genannten Aufgabe ist nun insbesondere vorgesehen, dass sich der obere (bzw. einer der oberen) und der untere (bzw. einer der unteren) Federlenker hinsichtlich ihrer Biegelinie voneinander unterscheiden. Eine Biegelinie ist bspw. laut Wikipedia eine mathematische Kurve, die die Verformung eines Balkens bei mechanischer Belastung beschreibt. Es ist in der Statik der Bauwerke die Linie, in die infolge der Elastizität des Baustoffes die Achse eines ursprünglich geradlinigen Balkenträgers übergeht. Dabei ist für die vorliegende Erfindung eine Biegelinie für einen Balken (als Federlenker) zu betrachten, der an seinen beiden Enden bezüglich der Kraft-Richtung, welche vorliegend die vertikal wirkende Schwerkraft des Fzg.-Aufbaus ist, fest eingespannt ist. Indem nun bspw. im Fall nur eines einzigen oberen und eines einzigen unteren Federlenkers diese Federlenker derart ausgeführt sind, dass sie unterschiedliche Biegelinien besitzen, verformen sich diese beiden Federlenker bei gleicher Krafteinwirkung (nämlich resultierend aus dem Gewicht der Karosserie und einem weiteren aus einem Einfedern oder Ausfedern des Rades gegenüber der Karosserie resultierenden Kraftanteil) unterschiedlich, weshalb diese beiden Federlenker dann in Fzg.-Querrichtung betrachtet unterschiedliche Längenänderungen erfahren. Wenn sich aber bspw. der obere Federlenker im Laufe einer in Vertikalrichtung erfolgenden Einfeder-Bewegung des Rades gegenüber der Karosserie in Fzg.-Querrichtung betrachtet um ein größeres Maß verkürzt als der untere Querlenker, so hat dies selbstverständlich eine betragsmäßige Vergrößerung des Sturzwinkels des Rades zur Folge.

In anderen Worten ausgedrückt ist mit der vorliegenden Erfindung zur Erzeugung einer grundsätzlich gewünschten Sturzprogression über dem Einfederweg des Rades, d.h. über dem Radhub zusätzlich zum bekannten Abstimmparameter der Lenkerlänge ein neuer Parameter in Form der Biegelinie verfügbar. Bekanntlich wird bei konventionellen Kraftfahrzeug-Achsen mit konventionellen bspw. stabförmigen Querlenken (ohne Federungsfunktion) für eine progressive Zunahme des negativen Sturzes beim Einfedern ein im Vergleich zum unteren Querlenker kürzerer oberer Querlenker eingesetzt. Der vergleichbare Effekt wird gemäß vorliegender Erfindung nun bei Verwendung von Federlenkern auch über eine andere Gestaltung der Biegelinie der Federlenker (d.h. eines oberen und eines unteren Federlenkers) erreicht, nämlich beispielsweise durch eine stärkere Krümmung des oberen Querlenkers beim Einfedern des Rades.

Unterschiedliche Biegelinien sind an den verschiedenen Lenkern auf unterschiedliche Weise darstellbar. So kann bspw. die Dicke der die Federlenker bildenden plattenförmigen Bauteile unterschiedlich sein, wobei ein solcher Unterschied der (senkrecht zu einer Ebene dieser plattenförmigen Bauteile und im Einbauzustand im Fahrzeug üblicherweise in Vertikalrichtung gemessenen) Dicke nicht über der gesamten zumindest annähernd horizontalen Fläche der Federlenker konstant sein muss. Beispielsweise kann eine Außenseite des oberen Federlenkers und/oder des unteren Federlenkers verstärkt ausgebildet sein, d.h. eine die vordere und oder hintere Kante eines Federlenkers kann nach Art eines Steges von einer eigentlichen (im Eibauzustand im wesentlichen horizontal liegenden) Oberfläche des Federlenkers in Vertikalrichtung betrachtet abragen. Mit einer solchen Ausbildung, die zur Erzielung einer unterschiedlichen Biegelinie für die verschiedenen Federlenker unterschiedlich sein kann, lassen sich die Federlenker vorteilhafterweise auch verstärken, wobei vorzugsweise in Fahrtrichtung des Fahrzeugs betrachtet die Außenseiten bzw. Kanten eines Federlenkers sowohl vorne als hinten gegen über dem dazwischen liegenden Flächenabschnitt verstärkt ausgebildet sind. Eine solche verstärkte Ausbildung ist insbesondere durch eine Verdickung des faserverstärkten Kunststoffs der Federlenker gebildet. Eine solche Verstärkung stellt im übrigen auch sicher, dass Längskräfte und Torsionsmomente über die Querachse übertragen werden können, ohne dass die Federlenker ausknicken. Zwischen diesen Verstärkungen bzw. verstärkten Kanten können die Federlenker für einen Einsatz bei herkömmlichen Personenkraftwagen dabei eine vergleichsweise dünne Wandstärke in der Größenordnung von maximal bspw. 30 Millimetern aufweisen. Dadurch übernehmen die Federlenker auch die Funktion eines (dem Fachmann bekannten) Schubfeldes. Diese vorteilhafte Ausbildung mit den verstärkten Außenseiten ermöglicht eine relativ niedrige Federrate in vertikaler Richtung in Verbindung mit hoher Torsionssteifigkeit.

Zurückkommend auf die Möglichkeiten zur Darstellung unterschiedlicher Biegelinien an einem (oder mehreren) oberen und einem (oder mehreren) unteren Federlenker(n) kann dies nicht nur - wie bereits erwähnt - durch die die Dicke der plattenförmigen Bauteile bzw. "Schubfelder" und deren ggf. verstärkten Außenseiten bzw. Kanten, gemessen in Hochrichtung, dargestellt werden, sondern auch durch Variation des Faservolumengehaltes. Bei den erfindungsgemäßen Federlenkern handelt es sich ja um faserverstärkte Kunststoffbauteile, deren mechanische Eigenschaften, zu denen auch eine die Biegelinie bestimmende Federrate gehört, u.a. auch durch die Anzahl von Verstärkungsfasern je Volumeneinheit von Kunststoffmasse gezielt einstellbar ist. Daneben gibt es eine Vielzahl weiterer Einflussgrößen für die Darstellung unterschiedlicher Biegelinien, wie bspw. sich über der Fläche des plattenförmigen Bauteile ändernde Profilquerschnitte, bspw. in Form einer zur Fahrzeugaußenseite hin abnehmenden Höhe des oberen Federlenker-Querschnitts. Ebenso ist eine unterschiedliche Ausführung der (im Einbauzustand in Fahrzeug-Längsrichtung gemessenen Breite der Federlenker möglich, welche sich im Übrigen für die verschiedenen Federlenker auch über den (in Fzg.-Querrichtung) gemessen Länge unterschiedlich ändern kann.

Sind in Vertikalrichtung betrachtet oben und/oder unten mehrere Federlenker vorgesehen, welche unterschiedliche Biegelinien aufweisen, so kann damit auch eine gewünschte Änderung des Spurwinkels über dem Radhub dargestellt werden. Die Wirkung bzw. der Effekt ist dabei die/der gleiche wie dies bereits für die Sturzwinkel-Änderung erläutert wurde, mit dem Unterschied, dass sich für eine Spurwinkeländerung unterschiedliche Biegelinien für zwei in Fahrzeug-Fahrtrichtung betrachtet zumindest annähernd hintereinander angeordneten Federlenkern vorliegen. Eine zumindest geringfügige Änderung des Spurwinkels des Rades über dem Radhub ist im übrigen auch durch die bereits erläuterte Ausgestaltung mit verdickten vorderen oder hinteren Kanten bzw. "Außenseiten" der Federlenker erzielbar.

Durch die Verwendung von faserverstärktem Kunststoff für die Federlenker ist eine erfindungsgemäße Einzelradaufhängung sehr leichtbauend. Gleichzeitig bedarf es sehr weniger Bauteile, da die Funktion der herkömmlichen, d.h. keine Federungsfunktion übernehmenden radführenden Lenker und die Funktion der herkömmlichen Karosserie-Tragfeder in den Federlenkern vereint ist. Und da die erfindungsgemäßen Federlenker die Funktion der herkömmlichen Tragfeder übernehmen, ist bevorzugt vorgesehen, dass zusätzlich zu den Federlenkern keine weitere Feder zum Aufnehmen der stationären Radlast vorhanden ist, d.h. alleinig die Federlenker dienen der stationären Abfederung des Radträgers in Vertikalrichtung, wobei jedoch in der gesamthaften Konstruktion der Einzelradaufhängung oder deren Anbindung durchaus federnde Gummielemente vorgesehen sein können, welche aber dann wie üblich elastokinematisch wirken, d.h. im Hinblick auf die dynamischen, im Fahrbetrieb des Fahrzeugs auftretenden Verhältnisse ausgelegt sind. Die erfindungsgemäßen Federlenker stellen in ihrem Zusammenwirken über dem Radhub einerseits die gewünschte Federkraft und Federrate sicher und weisen andererseits hinsichtlich Sturz- und Vorspurverlauf über dem Radhub die funktional erforderlichen Eigenschaften auf. Durch die Verformung bei äußeren Kräften wie Seiten- oder Bremskraft wird die Radstellung gezielt, beispielsweise für die Hinterachse in Richtung Vorspur, beeinflusst, um in Summe ein neutrales bis untersteuerndes Fahrverhalten zu erzeugen.

Die beiden Federlenker sind vorteilhafterweise so angeordnet, dass der untere Federlenker in der Nähe der Bodenfreiheit des Fahrzeugs und damit möglichst tief liegt, während sich obere Federlenker jedenfalls an einem Personenkraftwagen bspw. nahe der Unterseite eines (üblichen) des Karosserielängsträgers befinden kann. Bekanntlich ist relative Höhenlage eines solchen Karosserielängsträgers üblicherweise durch die gesetzlichen Crash-Vorschriften praktisch bestimmt (und daher nicht frei wählbar). Dabei kann der oberen Federlenkers direkt am Längsträger der Karosserie zwar unter Zwischenschaltung eines Gummielementes, dabei aber im wesentlichen starr (und insbesondere nicht um die Fahrzeug-Längsachse verschwenkbar) befestigt sein. Vorzugsweise ist der Radträger zwischen dem oberen Federlenker und dem unteren Federlenker angeordnet, wofür der obere Federlenker mit einem oberen Abschnitt des Radträgers und der untere Federlenker ist mit einem unteren Abschnitt des Radträgers verbunden ist, sodass zwischen diesen Federlenkern ein Antriebsstrang zum Antrieb des Rades und/oder eine Lenkmechanik für das Rad bzw. den Radträger angeordnet sein kann. Dabei sind die annähernd plattenförmigen Federlenker im Wesentlichen horizontal liegend angeordnet. Dies bedeutet, dass die Federlenker maximal um 20 Grad von einer horizontalen Ebene abweichend liegen. Damit können die Federlenker ihre Funktionen der Radführung und der Federung des Rades besonders gut erfüllen.

An den Federlenkern ist eine Breite in Fahrzeuglängsrichtung gemessene Breite definiert. Es kann die Breite des oberen und/oder des unteren Federlenkers zum Radträger hin abnehmen, womit in Draufsicht die Federlenker zur Fahrzeug-Außenseite hin verjüngt ausgebildet sind. In einer besonderen Ausgestaltung kann der obere Federlenker und/oder der untere Federlenker trapezförmig geformt sein, wobei die breitere Basis der Trapezform ist mit der Karosserie (oder einem Achsträger) verbunden ist. Die verjüngte Ausbildung, insbesondere die Trapezform, führt in bevorzugter Weise zur gewünschten Federrate der Federlenker.

Die Einzelradaufhängung umfasst idealerweise einen Schwingungsdämpfer. Dieser ist für nicht lenkbare Achsen zwischen dem Radträger und der Karosserie angeordnet. Für lenkbare Achsen kommt eine Anordnung zwischen dem oberen oder unteren Federlenker und der Karosserie in Frage. Damit der Schwingungsdämpfer elastokinematisch günstig nahe der Radmitte (in der Seitenansicht) angeordnet werden kann, ist vorteilhafterweise eine Aussparung im oberen Federlenker vorgesehen. Der Schwingungsdämpfer ragt durch diese Aussparung. Die Aussparung ist zur Vermeidung von Spannungsspitzen mit großem Radius oder annährend kreis- bzw. halbkreisförmig gestaltet und kann zur Verstärkung eine dicker ausgeführte Begrenzung aufweisen.

Die erfindungsgemäße Einzelradaufhängung weist zumindest eine Einspannvorrichtung an der Karosserie auf, in welche der Federlenker eingespannt wird. Idealerweise wird je Federlenker eine eigene Einspannvorrichtung verwendet. In einer ersten Variante ist der jeweilige Federlenker dabei in der Einspannvorrichtung an unterschiedlichen Positionen einspannbar, womit die freie Federlänge (in Fahrzeugquerrichtung) variiert bzw. auf ein gewünschtes Maß eingestellt werden kann. Ist (ggf. darüber hinaus) der jeweilige Federlenker auch in Fahrzeuglängsrichtung an unterschiedlichen Positionen einspannbar und/oder ist die Einspannvorichtung, in einer zweiten Variante, an unterschiedlichen Positionen in Fahrzeuglängs- oder Fahrzeugquerrichtung an der Karosserie befestigt, so ist eine äußerst flexible Montage der Federlenker an der Karosserie des Fahrzeugs möglich und insbesondere können die gleichen Federlenker-Bauteile für unterschiedliche Fahrzeugtypen oder für unterschiedliche Auslegungen der Einzelradaufhängung verwendet werden. Nach einer bevorzugten Ausführungsform kann eine solche Einspannvorrichtung eine Schelle umfassen, wobei der jeweilige Federlenker zwischen dieser Schelle und der Karosserie quasi verschiebbar ist.

Ausgangspunkt für die Überlegungen zur Verwendung einer solchen Einspannvorrichtung ist ein einheitliches faserverstärktes Kunststoffbauteil, nämlich die Federlenker, für die Radführung und Federung so variabel einzuspannen, dass sowohl Federrate und Federkraft innerhalb gewisser Grenzen variiert als auch verschiedene Spurweiten einer Fahrzeug-Radaufhängen dargestellt werden können. Dies wird dadurch erreicht, dass die freie Federlänge zwischen karosserieseitiger und radseitiger Befestigung des Federlenkers durch unterschiedlich weites Einschieben in die Einspannvorrichtung verändert wird. Dabei entstehen unterschiedliche Federraten, sodass ein schweres Fahrzeug eine kürzere freie Federlänge bekommen kann, um dieselbe gewünschte Schwingzahl zu erzeugen wie ein leichteres Fahrzeug. Die Federkraft in Konstruktions-Lage ändert sich durch die unterschiedlichen Einspannungen ebenfalls, wegen der höheren Rate in Richtung höherer Kraft. Wenn diese Kraftänderung zu hoch oder zu niedrig ausfällt, kann über eine geringe Variation der Federhöhe in vertikaler Richtung in der Größenordnung weniger Faserlagen des faserverstärkten Kunststoffteils korrigiert werden. Solch eine geringe Variation der Federhöhe ist ohne neue Werkzeuggeometrie möglich und generiert daher keine zusätzlichen Investitionskosten.

Der Unterschied in der freien Federlänge wird karosserieseitig vorzugsweise durch eine angepasste Position der Einspannvorrichtung ausgeglichen, um die gewünschte Spurweite in unterschiedlichen Fahrzeugen oder Anordnungen zu gewährleisten. Ist dagegen bei gleichen Federkräften oder Federraten eine Spurweitenvariation gewünscht, so kann die gesamte Einzelradaufhängung, insbesondere die Einspannvorrichtung, in Fahrzeugquerrichtung verschoben werden. Sollte eine Korrektur der Federkräfte oder Federraten nötig sein, so wird in der neuen Position wieder die freie Federlänge und die Federdicke angepasst, bis alle variierbaren Größen im Zielbereich liegen. Dabei kann die Einspannvorrichtung an der Karosserie verschraubt und/oder verschweißt und/oder verklebt sein. Eine Verklebung ist insbesondere bei Ausbildung der Einspannvorrichtung aus faserverstärktem Kunststoff vorgesehen, wobei vorzugsweise zwischen der Einspannvorrichtung und der Karosserie einen Formschluss vorzusehen ist.

An den Federlenkern können Verdickungen vorgesehen sein. Diese Verdickungen liegen im Einbauzustand in Fzg.-Querrichtung betrachtet vorzugsweise vor und hinter der Einspannvorrichtung, sodass ein Verschieben der Federlenker gegenüber der Einspannvorrichtung durch die Verdickungen begrenzt ist. Dadurch ist eine Verliersicherung im Überlastfall gegeben. Zwischen der Einspannvorrichtung, insbesondere ausgebildet aus metallischen Werkstoffen, und den Federlenkern kann zum Verschleißschutz eine Gummischicht vorgesehen sein. Die Dicke der Gummischicht liegt vorteilhafterweise im Bereich weniger Millimeter. Um eine definierte Längsfederung zur Erhöhung des Fahrkomforts zu erreichen, kann die Gummischicht auch dicker ausgeführt werden, vorteilhafterweise mit zumindest zehn Millimetern, besonders vorzugsweise zumindest 15 Millimetern, wobei sich diese Maßangaben jeweils auf einen Einsatz an Personenkraftwagen beziehen. Zur Entkopplung einer geringen Steifigkeit in Fahrzeuglängsrichtung und ein hohen Steifigkeit in Vertikalrichtung (d.h. Einspannrichtung) können einzelne, bspw. stegförmige Gummielemente vorgesehen sein, die sich unter Druck nur wenig verformen und eine progressive Steifigkeit aufweisen, aber auf Scherung weniger steif sind und damit Längsfederweg zur Verfügung stellen. Ein weiterer Effekt der niedrigen Steifigkeit in der Gummischicht ist die akustische Entkopplung durch den hohem Impedanzsprung zwischen Gummi und Karosserie.

Die Einspannvorrichtung, insbesondere die Schelle der Einspannvorrichtung, weist vorteilhafterweise eine Versteifung auf, um das Widerstandsmoment um die Längsachse des Federlenkers zu erhöhen. Dadurch ist es möglich, die Schelle nur außerhalb des Federlenkers mit der Karosserie beziehungsweise der restlichen Einspannvorrichtung zu verschrauben und es bedarf keiner Verschraubung, die den Federlenker durchsetzt. Gesamthaft betrachtet ergibt sich durch die Verwendung einer Einspannvorrichtung ein Gleichteilkonzept für Einzelradaufhängungen und somit ein einfacher Einsatz in unterschiedlichen Fahrzeugderivaten mit ausstattungsabhängig verschiedenen Fahrzeuggewichten bei gleichem Höhenstand und gleicher Schwingzahl einerseits und verschiedenen Spurweiten andererseits, und zwar vorteilhafterweise unter Vermeidung von kostenintensiven Varianten der faserverstärkten Kunststoffbauteil und der verwendeten Werkzeuge.

Weitere Einzelheiten, Merkmale und Vorteile der Erfindung ergeben sich aus der nachfolgenden Beschreibung und den Figuren. Es zeigen:
- Figuren 1 bis 4: unterschiedliche Ansichten einer gattungsgemäßen Radaufhängung, und
- Figuren 5 und 6: zwei Ansichten der erfindungsgemäßen Einzelradaufhängung gemäß einem Ausführungsbeispiel.

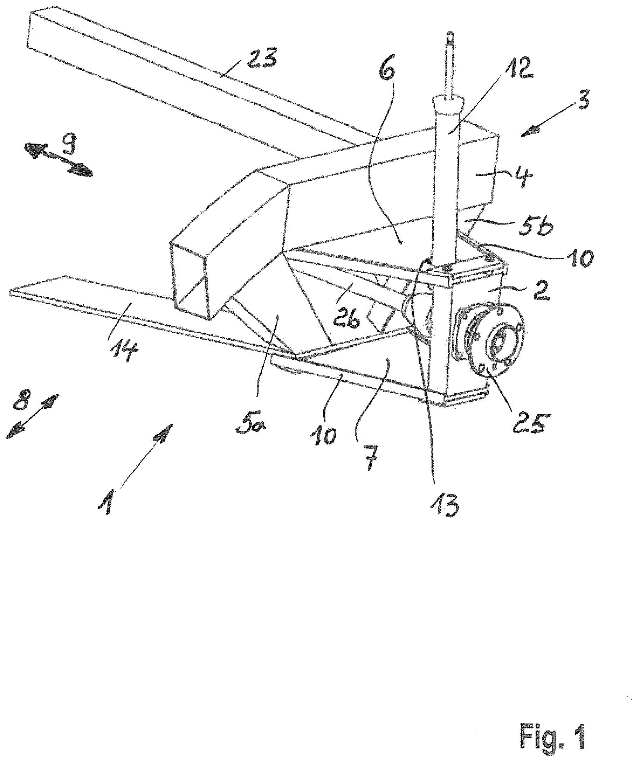

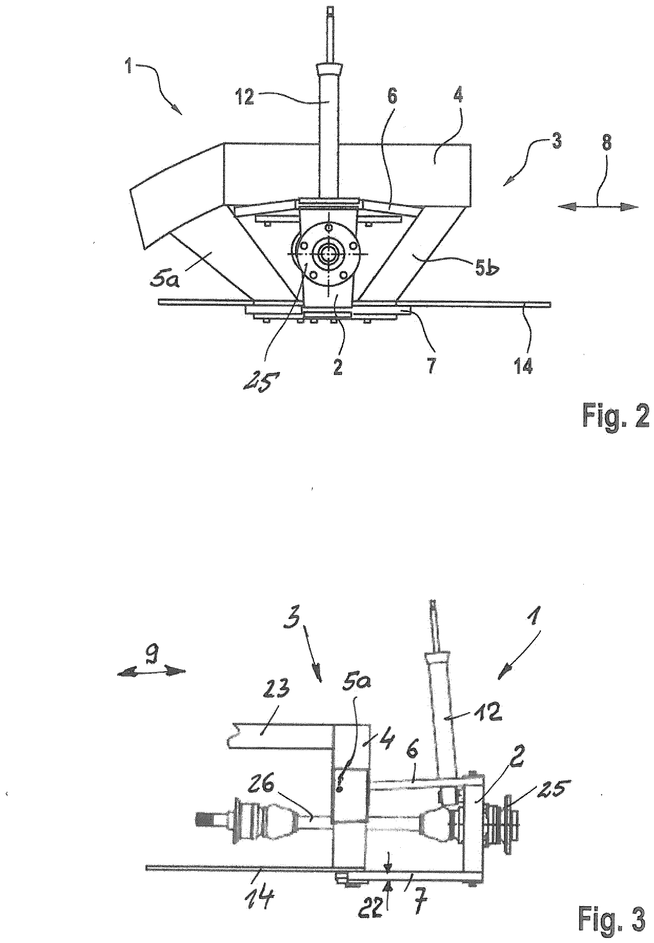

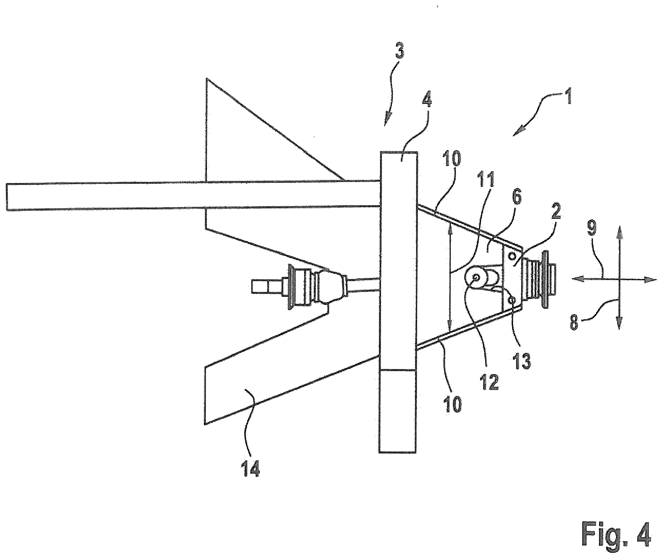

Gleiche bzw. funktional gleiche Bauteile sind in beiden Radaufhängungen mit denselben Bezugszeichen versehen. Figur 1 zeigt eine isometrische Ansicht. Figur 2 zeigt eine Seitenansicht (in Fzg.-Querrichtung betrachtet). Figur 3 zeigt eine Frontansicht (in Fzg.-Längsrichtung betrachtet) und Figur 4 zeigt eine Draufsicht (in Vertikalrichtung betrachtet). In den Figuren sind die Fahrzeuglängsrichtung mit einem Pfeil 8 und die Fahrzeugquerrichtung mit einem Pfeil 9 verdeutlicht.

Figur 1 zeigt eine erfindungsgemäße Einzelradaufhängung 1 umfassend einen Radträger 2, an dem ein Radlager 25 angeschraubt ist. Der Radträger 2 ist über einen oberen Federlenker 6 und einen untere Federlenker 7 der Einzelradaufhängung 1 mit einer Karosserie 3 verbunden. Von dieser Karosserie 3 sind der Einfachheit halber lediglich ein Abschnitt eines Längsträgers 4, eine Verbindungsstruktur 5a, 5b sowie ein Abschnitt eines sog. Schubfeldes 14 dargestellt; anstelle dieser Elemente der (hier "weit reichenden") Karosserie 3 könnte aber auch ein Achsträger vorgesehen sein.

Die beiden Federlenker 6, 7 sind hier trapezförmig ausgestaltet. Aufgrund der Trapezform verjüngt sich die in Fzg.-Längsrichtung 8 gemessene Breite 11 (vgl. Fig.4) der Federlenker 6, 7 in Fahrzeugquerrichtung 9 betrachtet nach außen hin. Die Schmalseite jedes Federlenkers 6, 7 ist mit dem Radträger 2 fest verbunden. Aufgrund dieser festen Verbindung handelt es sich bei dieser Radaufhängung um eine solche einer Hinterachse mit nicht gelenkten Rädern. Die Breitseiten der trapezförmigen Federlenker 6, 7 sind fest mit der Karosserie 3 verbunden. Eine größte Dicke 22 der Federlenker 6, 7 beträgt bevorzugt maximal 10 % der größten Breite 11.

Der obere Federlenker 6 ist mit einer Unterseite des Längsträgers 4 verbunden. Der untere Federlenker 7 befindet sich in etwa in der Höhe der auch durch andere Bauelemente des Fahrzeugs definierten Bodenfreiheit des Fahrzeuges. Vorliegend umfasst die Karosserie auch zur Anbindung des unteren Federlenkers 7 an dieselbe eine Verbindungsstruktur 5a, 5b, die sich vom Längsträger 4 nach in Vertikalrichtung nach unten erstreckt und an deren dem Längsträger 4 abgewandten Ende bzw. Enden für eine ausreichende Steifigkeit in Querrichtung 9 ein Karosserie-Schubfeld 14, insbesondere aus faserverstärktem Kunststoff, befestigt ist, welches sich zur anderen Radaufhängung dieser Fahrzeugachse auf der anderen Fahrzeugseite erstreckt. Insbesondere erstreckt sich dieses Karosserieschubfeld 14 somit zwischen einer linken und rechten Einzelradaufhängung 1. Wenn die Längsträger 4 der Karosserie 3 weiterhin über Querverbindung 23 in Höhe des Kofferraumbodens des Fahrzeugs (bspw. Personenkraftwagens) verbunden sind, entsteht damit (mit dem Schubfeld 14, der Querverbindung 23 und der bezüglich des Fahrzeugs linksseitigen und rechtsseitigen Verbindungsstruktur 5a, 5b) ein ringförmig geschlossenes Profil mit hoher Torsionssteifigkeit, was sich günstig auf die lokalen Steifigkeiten in den Anbindungsstellen der unteren Federlenker 7 auswirkt. Die Figuren 1 bis 4 zeigen ferner einen Schwingungsdämpfer 12, der mit seinem unteren Ende am Radträger 2 befestigt ist. Ein oberes Ende des Schwingungsdämpfers 12 ist auf nicht figürlich dargestellte Weise mit der Karosserie 3 verbunden. Im oberen Federlenker 6 ist eine Aussparung 13 vorgesehen, durch welche der Schwingungsdämpfer 12 hindurch ragt.

Den Figuren 1 bis 4 ist zu entnehmen, dass an den in Fahrtrichtung 8 betrachtet vorderen und hinteren Außenseiten bzw. Kanten der Federlenker 6, 7 Verstärkungen 10 ausgebildet sind. Diese Verstärkungen 10 sind insbesondere verdickte Ausbildungen der ansonsten dünnwandigen, plattenförmigen und aus faserverstärktem Kunststoff bestehenden Federlenker 6, 7, die sich - wie vor der Figurenbeschreibung ausführlich erläutert wurde, hinsichtlich ihrer Biegelinie voneinander derart unterscheiden, dass sich beim Einfedern des Rades eine progressive Zunahme des negativen Rad-Sturzes ergibt. Weiterhin erkennt man in diesen Figuren eine Antriebswelle 26 für das am Radlager 25 zu befestigende Rad.

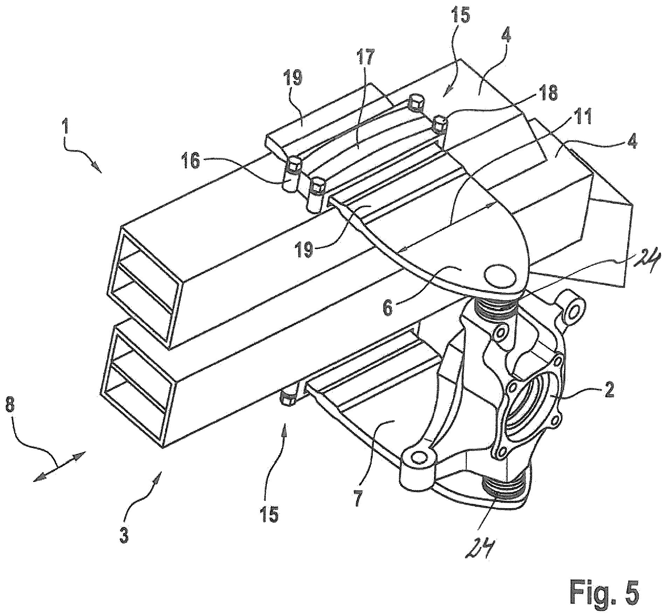

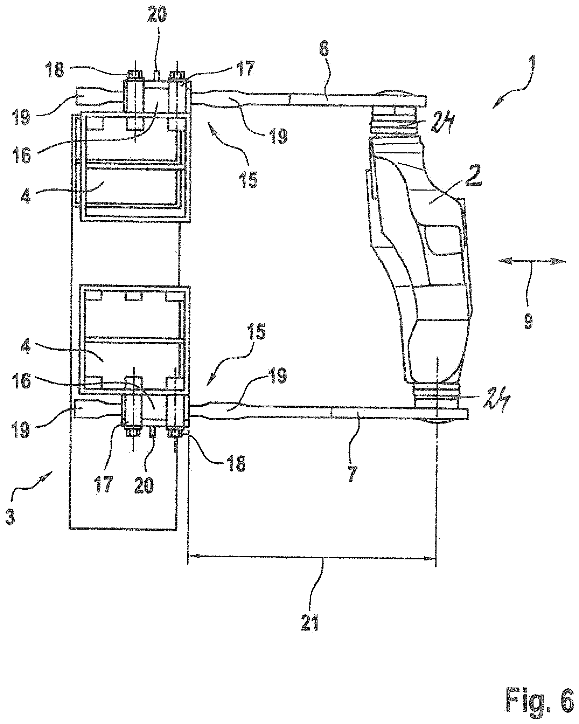

Im Ausführungsbeispiel nach den Figuren 5, 6 umfasst die Karosserie 3 zwei parallel zueinander verlaufende und in Vertikalrichtung betrachtet übereinander liegende Längsträger 4, jedoch ist eine solche Ausgestaltung keineswegs obligatorisch. Vielmehr kann bspw. anstelle des unteren Längsträgers 4 eine Verbindungsstruktur 5a, 5b wie im gattungsgemäßen Beispiel vorgesehen sein. Anhand des Ausführungsbeispiels soll vielmehr erläutert werden, dass zur Befestigung der Federlenker 6, 7 an der Karosserie 3 Einspannvorrichtungen 15 verwendet werden können. Hier im Ausführungsbeispiel sind die Federlenker 6, 7 nicht trapezförmig ausgebildet, allerdings ist auch hier eine solche Ausgestaltung möglich. Des Weiteren zeigt das Ausführungsbeispiel eine Ausführungsform, bei welcher der Radträger 2 drehbar bzw. um eine im wesentlichen in Vertikalrichtung verlaufende Achse verschwenkbar jeweils über ein Drehgelenk 24 mit den Federlenkern 6, 7 verbunden ist. Es handelt sich hiermit um eine Einzelradaufhängung 1 für gelenkte Räder und somit vorzugsweise für eine Vorderachse des Fahrzeugs. Allerdings kann auch in der Anordnung nach dem Ausführungsbeispiel eine auch um die Vertikalachse steife Verbindung zwischen Radträger 2 und den Federlenkern 6, 7 vorgesehen sein.

Jede in den Figuren 5, 6 gezeigte Einspannvorrichtung 15 umfasst eine Basis 16, die fest mit der Karosserie 3 verbunden ist. Auf der Basis 16 ist eine Schelle 17 aufgeschraubt. Zwischen der Basis 16 und der Schelle 17 ist der jeweilige Federlenker 6, 7 einschiebbar. Über Verschraubungen 18 erfolgt dabei ein Einspannen des jeweiligen Federlenkers 6 bzw. 7 in der zugehörigen Einspannvorrichtung 15, wobei die gezeigten Verschraubungen 18 sowohl zur Verbindung der Schelle 17 mit der Basis 16 als auch zur Verbindung der Basis 16 mit der Karosserie 3 verwendet werden bzw. verwendet werden können. In vorteilhafter Weise sind die Federlenker 6, 7 an bzw. in unterschiedlichen Positionen, in Fzg.-Querrichtung 9 betrachtet unterschiedlich weit und dabei vorzugsweise stufenlos in die Einspannvorrichtung 15 einschiebbar. Dadurch ergeben sich unterschiedliche freie Federlängen 21. Des Weiteren können die Einspannvorrichtungen 15 an unterschiedlichen Stellen sowohl in Fahrzeugquerrichtung 9 als auch in Fahrzeuglängsrichtung 8 an der Karosserie 3 befestigt werden. Dadurch kann die durch die Federlenker 6, 7 und die Einspannvorrichtungen 15 gebildete Baueinheit in einfachster Weise für unterschiedlichste Derivate einer bestimmten Fahrzeugstruktur verwendet werden. An den Federlenkern 6, 7 sind vorliegend Verdickungen 19 ausgebildet. Diese Verdickungen 19 begrenzen den Verschiebeweg der Federlenker 6, 7 gegenüber der Einspannvorrichtung 15. Des Weiteren weist die Schelle 17 vorteilhafterweise Versteifungen 20 auf. Selbstverständlich können bei geeigneter Gestaltung der Schelle(n) 17 auch die Federlenker 6, 7 Verstärkungen analog der gattungsgemäßen Radaufhängung (dort mit der Bezugsziffer 10 gekennzeichnet) vorgesehen sein.

## Patentansprüche

1. Eine mit einer Karosserie des Fahrzeuges verbundene Einzelradaufhängung (1) eines Fahrzeuges, umfassend einen Radträger (2) zur drehbaren Aufnahme eines Rades, zumindest annähernd in Fahrzeug-Querrichtung verlaufende und aus faserverstärktem Kunststoff bestehende Federlenker (6, 7) zur federnden Verbindung des Radträgers (2) mit der Karosserie (3) des Fahrzeuges wobei in Vertikalrichtung betrachtet ein oberer Federlenker (6) und ein unterer Federlenker (7) in Form zweier voneinander getrennter, annähernd plattenförmiger Bauteile vorgesehen sind, deren sich über einer vertikalen Hubbewegung des Radträgers (2) einstellende Biegelinien geringfügig voneinander unterscheiden, und zumindest eine Einspannvorrichtung (15) an der Karosserie (3) zum Einspannen des oberen oder unteren Federlenkers (6, 7), **dadurch gekennzeichnet, dass** der jeweilige Federlenker (6, 7) in der Einspannvorrichtung (15) an unterschiedlichen Positionen einspannbar ist, und/oder dass die Einspannvorrichtung (15) an unterschiedlichen Positionen an der Karosserie (3) befestigbar ist, um die Spurweite des Fahrzeugs zu variieren.

2. Einzelradaufhängung nach Anspruch 1, **dadurch gekennzeichnet, dass** der Radträger (2) zwischen dem oberen Federlenker (6) und dem unteren Federlenker (7) angeordnet ist.

3. Einzelradaufhängung nach einem der vorhergehenden Ansprüche, **dadurch gekennzeichnet, dass** die annähernd plattenförmigen Federlenker (6, 7) zumindest annähernd horizontal, mit einer maximalen Abweichung von 20 Grad zur horizontalen Ebene, angeordnet sind.

4. Einzelradaufhängung nach einem der vorhergehenden Ansprüche, **dadurch gekennzeichnet, dass** zumindest eine Außenseite oder zumindest annähernd in Fahrzeug-Querrichtung verlaufende und in Fahrtrichtung des Fahrzeugs vordere oder hintere Kante des oberen Federlenkers (6) und/oder des unteren Federlenkers (7) gegenüber dessen zwischen diesen Kanten liegender Fläche in Vertikalrichtung betrachtet verstärkt ausgebildet ist.

5. Einzelradaufhängung nach einem der vorhergehenden Ansprüche, **dadurch gekennzeichnet, dass** die Federlenker (6, 7) eine Breite (11), definiert in Fahrzeuglängsrichtung (8) aufweisen, wobei die Breite (11) des oberen Federlenkers (6) und/oder des unteren Federlenkers (7) zum Radträger (2) hin abnimmt.

6. Einzelradaufhängung nach Anspruch 5, **dadurch gekennzeichnet, dass** der obere Federlenker (6) und/oder der untere Federlenker (7) trapezförmig ausgestaltet sind.

7. Einzelradaufhängung nach einem der vorhergehenden Ansprüche, **gekennzeichnet durch** einen Schwingungsdämpfer (12) zwischen dem Radträger (2) und der Karosserie (3), wobei der Schwingungsdämpfer (12) durch eine Aussparung (13) im oberen Federlenker (6) verläuft.

8. Einzelradaufhängung nach einem der vorhergehenden Ansprüche, **dadurch gekennzeichnet, dass** alleinig die Federlenker (6, 7) der Abfederung des Radträgers (2) in Vertikalrichtung dienen.

9. Einzelradaufhängung nach einem der vorangegangenen Ansprüche, **dadurch gekennzeichnet, dass** die Einspannvorrichtung (15) eine Schelle (17) umfasst und der jeweilige Federlenker (6, 7) zwischen der Schelle (17) und der Karosserie (3) einspannbar ist.

## Claims

1. Independent wheel suspension (1) of a vehicle that is connected to a body of the vehicle, comprising a wheel bearing (2) for rotatably receiving a wheel, spring-loaded control arms (6, 7) which for connecting in a spring-loaded manner the wheel bearing (2) to the body (3) of the vehicle run at least approximately in the vehicle transverse direction and are composed of fibre-reinforced plastics material; wherein, when viewed in the vertical direction, an upper spring-loaded control arm (6) and a lower spring-loaded control arm (7) are provided in the form of two mutually separate, approximately plate-shaped components, the deflection curves of said components that arise by way of a vertical lifting movement of the wheel bearing (2) slightly differing from each other; and at least one clamping device (15) on the body (3) for clamping the upper or the lower spring-loaded control arm (6, 7), **characterized in that** the respective spring-loaded control arm (6, 7) is able to be clamped at different positions in the clamping device (15), and/or **in that** the clamping device (15) is able to be fastened at different positions on the body (3), so as to vary the track of the vehicle.

2. Independent wheel suspension according to Claim 1, **characterized in that** the wheel bearing (2) is disposed between the upper spring-loaded control arm (6) and the lower spring-loaded control arm (7).

3. Independent wheel suspension according to one of the preceding claims, **characterized in that** the approximately plate-shaped spring-loaded control arms (6, 7) are disposed so as to be at least approximately horizontal, at a maximum deviation of 20° from the horizontal plane.

4. Independent wheel suspension according to one of the preceding claims, **characterized in that** at least an external side or, when viewed in the vehicle travel direction, a front or rear edge of the upper spring-loaded control arm (6) and/or of the lower spring-loaded control arm (7) that runs at least approximately in the vehicle transverse direction, is configured so as to be reinforced in relation to the face of said external side which, when viewed in the vertical direction, lies between these edges.

5. Independent wheel suspension according to one of the preceding claims, **characterized in that** the spring-loaded control arms (6, 7) in terms of the vehicle longitudinal direction (8) have a width (11), wherein the width (11) of the upper spring-loaded control arm (6) and/or of the lower spring-loaded control arm (7) decreases towards the wheel bearing (2) .

6. Independent wheel suspension according to Claim 5, **characterized in that** the upper spring-loaded control arm (6) and/or the lower spring-loaded control arm (7) are designed so as to be trapezoid.

7. Independent wheel suspension according to one of the preceding claims, **characterized by** a vibration damper (12) between the wheel bearing (2) and the body (3), wherein the vibration damper (12) runs through a clearance (13) in the upper spring-loaded control arm (6).

8. Independent wheel suspension according to one of the preceding claims, **characterized in that** the spring-loaded control arms (6, 7) exclusively serve for cushioning the wheel bearing (2) in the vertical direction.

9. Independent wheel suspension according to one of the preceding claims, **characterized in that** the clamping device (15) comprises a bracket (17) and the respective spring-loaded control arm (6, 7) is able to be clamped between the bracket (17) and the body (3) .

## Revendications

1. Suspension de roue indépendante (1) pour un véhicule, raccordée à une carrosserie du véhicule, comprenant un support de roue (2) pour recevoir une roue de manière rotative, des bras de ressort (6, 7) s'étendant au moins approximativement dans la direction transversale du véhicule et constitués de plastique renforcé par des fibres, pour le raccordement, avec suspension à ressort, du support de roue (2) à la carrosserie (3) du véhicule, un bras de ressort supérieur (6) et un bras de ressort inférieur (7), vus dans la direction verticale, étant prévus sous forme de deux composants séparés l'un de l'autre, approximativement en forme de plaque, dont les lignes de courbure se formant par un mouvement de levage vertical du support de roue (2) sont légèrement différentes les unes des autres, et au moins un dispositif de serrage (15) sur la carrosserie (3) pour serrer le bras de ressort supérieur ou inférieur (6, 7),
**caractérisée en ce que**
le bras de ressort respectif (6, 7) peut être serré dans le dispositif de serrage (15) à des positions différentes et/ou **en ce que** le dispositif de serrage (15) peut être fixé à des positions différentes sur la carrosserie (3) afin de faire varier l'écartement des roues du véhicule.

2. Suspension de roue indépendante selon la revendication 1, **caractérisée en ce que** le support de roue (2) est disposé entre le bras de ressort supérieur (6) et le bras de ressort inférieur (7).

3. Suspension de roue indépendante selon l'une quelconque des revendications précédentes, **caractérisée en ce que** les bras de ressort (6, 7) approximativement en forme de plaque sont disposés au moins approximativement horizontalement avec un écartement maximum de 20 degrés par rapport au plan horizontal.

4. Suspension de roue indépendante selon l'une quelconque des revendications précédentes, **caractérisée en ce qu'**au moins un côté extérieur ou une arête avant ou arrière, dans la direction de conduite du véhicule, du bras de ressort supérieur (6) et/ou du bras de ressort inférieur (7), et s'étendant au moins approximativement dans la direction transversale du véhicule, est réalisé(e) de manière renforcée par rapport à sa surface située entre ces arêtes, vu dans la direction verticale.

5. Suspension de roue indépendante selon l'une quelconque des revendications précédentes, **caractérisée en ce que** les bras de ressort (6, 7) présentent une largeur (11) définie dans la direction longitudinale du véhicule (8), la largeur (11) du bras de ressort supérieur (6) et/ou du bras de ressort inférieur (7) diminuant vers le support de roue (2).

6. Suspension de roue indépendante selon la revendication 5, **caractérisée en ce que** le bras de ressort supérieur (6) et/ou le bras de ressort inférieur (7) sont configurés sous forme trapézoïdale.

7. Suspension de roue indépendante selon l'une quelconque des revendications précédentes, **caractérisée par** un amortisseur de vibrations (12) entre le support de roue (2) et la carrosserie (3), l'amortisseur de vibrations (12) s'étendant à travers un évidement (13) dans le bras de ressort supérieur (6).

8. Suspension de roue indépendante selon l'une quelconque des revendications précédentes, **caractérisée en ce que** les bras de ressort (6, 7) servent à eux seuls à la suspension du support de roue (2) dans la direction verticale.

9. Suspension de roue indépendante selon l'une quelconque des revendications précédentes, **caractérisée en ce que** le dispositif de serrage (15) comprend un collier de serrage (17) et le bras de ressort respectif (6, 7) peut être serré entre le collier de serrage (17) et la carrosserie (3).
